# EUROPÄISCHE PATENTANMELDUNG

(11) **EP 2 754 592 A2**
(43) Veröffentlichungstag der Anmeldung: **16.07.2014**
(21) Anmeldenummer: 13193997.7
(22) Anmeldetag: 22.11.2013
(51) Int. Cl.: B60T 8/40, B60T 8/48

(54) **Aggregat für ein hydraulisches Bremssystem, hydraulisches Bremssystem, Steuervorrichtung zum Zusammenwirken mit einem hydraulischen Bremssystem und Verfahren zum Betreiben eines hydraulischen Bremssystems**

(30) Priorität: 15.01.2013 DE 102013200471
(71) Anmelder: ROBERT BOSCH GMBH, 70442 Stuttgart (DE)
(72) Erfinder: Drotleff, Dirk, 71720 Oberstenfeld (DE)

(57) **Zusammenfassung**

Die vorliegende Erfindung betrifft ein Aggregat (10) für ein hydraulisches Bremssystem mit einem ersten Teilbremskreis (12a) oder Bremskreis (14a), welcher an einen Hauptbremszylinder (16) und an mindestens einen ersten Radbremszylinder (18a) anbindbar oder angebunden ist, und welcher ein erstes Druckablassventil (20a) umfasst, und einem zweiten Teilbremskreis (12b) oder Bremskreis (14b), welcher an einen Hauptbremszylinder (16) und an mindestens einen zweiten Radbremszylinder (18b) anbindbar oder angebunden ist, wobei der erste Teilbremskreis (12a) oder Bremskreis (14a) ein erstes Umschaltventil (24a) aufweist, und der zweite Teilbremskreis (12b) oder Bremskreis (14b) ein zweites Umschaltventil (24b) und ein zweites Druckablassventil (20b) umfasst. Ebenso betrifft die Erfindung ein hydraulisches Bremssystem und eine Steuervorrichtung zum Zusammenwirken mit einem hydraulischen Bremssystem. Des Weiteren betrifft die Erfindung ein Verfahren zum Betreiben eines hydraulischen Bremssystems eines Fahrzeugs.

## Beschreibung

Die Erfindung betrifft ein Aggregat für ein hydraulisches Bremssystem eines Fahrzeugs und ein hydraulisches Bremssystem für ein Fahrzeug. Ebenso betrifft die Erfindung eine Steuervorrichtung zum Zusammenwirken mit einem hydraulischen Bremssystem. Des Weiteren betrifft die Erfindung ein Verfahren zum Betreiben eines hydraulischen Bremssystems eines Fahrzeugs.

### Stand der Technik

In der DE 10 2011 005 822 A1 sind Bremssysteme und Verfahren zum Betreiben der Bremssysteme beschrieben. Die Bremssysteme weisen jeweils einen abkoppelbaren Bremskreis auf, welcher über ein Trennventil an einem Hauptbremszylinder angebunden ist. Außerdem ist der abkoppelbare Bremskreis über ein Druckablassventil an einem Bremsflüssigkeitsreservoir angebunden.

### Offenbarung der Erfindung

Die Erfindung schafft ein Aggregat für ein hydraulisches Bremssystem eines Fahrzeugs mit den Merkmalen des Anspruchs 1, ein hydraulisches Bremssystem für ein Fahrzeug mit den Merkmalen des Anspruchs 4, eine Steuervorrichtung mit den Merkmalen des Anspruchs 6 und ein Verfahren zum Betreiben eines hydraulischen Bremssystems eines Fahrzeugs mit den Merkmalen des Anspruchs 11.

### Vorteile der Erfindung

Die vorliegende Erfindung ermöglicht es einem Fahrer jederzeit die Bremsdrücke in beiden Bremskreisen durch ein direktes Einbremsen zu erhöhen. Trotz eines geschlossenen ersten Umschaltventils und eines geschlossenen zweiten Umschaltventils kann der Fahrer die parallel dazu angeordneten/geschalteten Rückschlagventile überdrücken. Somit kann der Fahrer jederzeit aktiv in den ersten Bremskreis einbremsen. Die vorliegende Erfindung umgeht somit die herkömmlicherweise oft auftretenden Nachteile von By-Wire-Bremssystemen.

Zusätzlich ist aufgrund der Anbindung beider Bremskreise/Möglichkeit zur Anbindung beider Teilbremskreise an das Bremsflüssigkeitsreservoir eine Hydraulik realisiert, welche zumindest ein Ablassen von Volumen/Bremsflüssigkeit aus dem ersten Bremskreis über das erste Druckauslassventil in das Bremsflüssigkeitsreservoir und/oder aus dem zweiten Bremskreis über das zweite Druckauslassventil in das Bremsflüssigkeitsreservoir erlaubt. Auf diese Weise können jederzeit der erste Bremsdruck in dem ersten Bremskreis und/oder der zweite Bremsdruck in dem zweiten Bremskreis reduziert werden. Die auf diese Weise reduzierbare Bremswirkung des mindestens einen ersten Radbremszylinders des ersten Bremskreises und/oder des mindestens einen zweiten Radbremszylinders des zweiten Bremskreises kann beispielsweise zum Verblenden eines Generator-Bremsmoments mindestens eines Elektromotors genutzt werden. Die vorliegende Erfindung kann somit zusätzlich dazu eingesetzt werden, einen Fahrer zum Gebrauch eines energiesparenden und emissionsärmeren Fahrzeugs mit mindestens einem generatorisch einsetzbaren Elektromotor anzuregen.

In einer vorteilhaften Ausführungsform des Aggregats umfassen der erste Teilbremskreis oder Bremskreis einen ersten Pulsationsdämpfer und/oder der zweite Teilbremskreis oder Bremskreis einen zweiten Pulsationsdämpfer. Insbesondere bei einer Ausstattung beider Primärkreise mit Pulsationsdämpfern ist eine Entkopplung des Fahrers von Pulsationen einer Rückförderhydraulik gewährleistet.

Beispielsweise können der erste Teilbremskreis oder Bremskreis eine erste Druckfördereinrichtung, welche saugseitig an das Bremsflüssigkeitsreservoir anbindbar oder angebunden ist, und/oder der zweite Teilbremskreis oder Bremskreis eine zweite Druckfördereinrichtung, welche saugseitig an das Bremsflüssigkeitsreservoir anbindbar oder angebunden ist, umfassen. Somit können der erste Bremsdruck in dem ersten Bremskreis und/oder der zweite Bremsdruck in dem zweiten Bremskreis mittels eines Betriebs der jeweiligen Druckfördereinrichtung, welche beispielsweise eine Pumpe sein kann, bremskreisindividuell und bedarfsgerecht aktiv aufgebaut werden. Außerdem kann eine hydraulische Last der mindestens einen Pumpe/mindestens eines Motors der mindestens einen Pumpe (selbst bei einer Nichtverfügbarkeit des mindestens einen generatorisch einsetzbaren Elektromotors) gegenüber einem Brake-By-WreBremssystem oder einem Einachs-Brake-By-Wre-Bremssystem deutlich reduziert werden.

Die oben aufgezählten Vorteile sind auch bei einem hydraulischen Bremssystem für ein Fahrzeug mit einem derartigen Aggregat gewährleistet.

In einer vorteilhaften Ausführungsform des hydraulischen Bremssystems sind der erste Teilbremskreis oder Bremskreis und der zweite Teilbremskreis oder Bremskreis über einen gemeinsamen Saugleitungsabschnitt mit dem Bremsflüssigkeitsreservoir verbunden. Somit ist es bei einer Montage des hydraulischen Bremssystems ausreichend, nur eine gemeinsame Leitung von dem Aggregat/ESP-System zum Bremsflüssigkeitsreservoir zu verlegen.

Außerdem können die beschriebenen Vorteile realisiert werden durch eine Steuervorrichtung zum Zusammenwirken mit einem hydraulischen Bremssystem.

In einer vorteilhaften Ausführungsform der Steuervorrichtung ist die Ansteuereinrichtung dazu ausgelegt, sofern eine als zumindest Teil des Sensorsignals bereitgestellte Größe bezüglich eines Verstellwegs des betätigten Bremsbetätigungselements aus seiner Ausgangsstellung und/oder bezüglich einer Betätigungsstärke der Betätigung des Bremsbetätigungselements kleiner als eine vorgegebene Grenz-Größe ist, das erste Druckablassventil und das zweite Druckablassventil zumindest zeitweise derart in den zumindest teilgeöffneten Zustand zu steuern, dass ein in dem ersten Bremskreis vorliegender erster Bremsdruck und ein in dem zweiten Bremskreis vorliegender zweiter Bremsdruck gleich einem Druck in dem Bremsflüssigkeitsreservoir sind. Die Steuervorrichtung realisiert somit in diesem Fall über eine gezielte Ventilansteuerungsstrategie einen "nicht-mechanischen" Leerweg. Der "nicht-mechanische" Leerweg kann bedarfsgerecht und ohne einen mechanischen Leerweg/eine Änderung des mechanischen Leerwegs an ein von dem Fahrer bevorzugtes (standardgemäßes) Bremsbetätigungsgefühl/Pedalgefühl angepasst werden. Die vorteilhafte Auslegung der Steuervorrichtung ermöglicht somit insbesondere einen Verzicht auf einen (zusätzlichen) mechanischen Leerweg, ohne dass dies mit einer Abweichung von einem standardgemäßen Bremsbetätigungsgefühl/ Pedalgefühl für den Fahrer verbunden wäre. Damit ermöglicht das Ausführungsform die Verwendung der gleichen Aktuationskomponenten in hybriden und nicht-hybriden Fahrzeugvarianten. Mittels der gesteigerten Einsetzbarkeit der gleichen Aktuationskomponenten lassen sich Kosten senken.

Bevorzugter Weise ist die Ansteuereinrichtung zusätzlich dazu ausgelegt, sofern die Größe größer als die vorgegebene Grenz-Größe ist, das erste Druckablassventil und das zweite Druckablassventil in einen geschlossen Zustand zu steuern. Somit ist während der Betätigung des Bremsbetätigungselements (z.B. eines Bremspedals) für den Fahrer gewährleistbar, dass der Fahrer nach einem Überwinden des "nicht-mechanischen" Leerwegs die standardgemäße Rückantwort des Druckaufbaus in den Bremskreisen des hydraulischen Bremssystems spürt.

In einer weiteren vorteilhaften Ausführungsform ist die Ansteuereinrichtung zusätzlich dazu ausgelegt, unter Berücksichtigung zumindest einer bereitgestellten Information bezüglich eines mittels mindestens eines Elektromotors aktuell maximal ausführbaren Kann-Generator-Bremsmoments mindestens eine erste Druckfördereinrichtung des ersten Bremskreises und/oder eine zweite Druckfördereinrichtung des zweiten Bremskreises so anzusteuern, dass, sofern das Kann-Generator-Bremsmoment kleiner als ein aktuell mittels des mindestens einen Elektromotors ausgeführtes Generator-Bremsmoment ein von einem Fahrer und/oder einem automatischen Geschwindigkeitssteuersystem angefordertes Soll-Gesamt-Bremsmoment ist, der ersten Bremsdruck in dem ersten Bremskreis mittels der mindestens einen angesteuerten ersten Druckfördereinrichtung und/oder der zweite Bremsdruck in dem zweiten Bremskreis mittels der mindestens einen angesteuerten zweiten Druckfördereinrichtung steigerbar sind. Die Steuervorrichtung kann somit zusätzlich dazu genutzt werden, zeitliche Schwankungen des aktuell maximal ausführbaren Kann-Generator-Bremsmoments oder eine hohe Bremsanforderung durch ein entsprechendes Anpassen des ersten Bremsdrucks und/oder des zweiten Bremsdrucks zumindest teilweise zu kompensieren.

Des Weiteren kann die Ansteuereinrichtung zusätzlich dazu ausgelegt sein, sofern das mittels des mindestens einen Elektromotors auf nur eine generatorisch abbremsbare Achse aktuell maximal ausführbare Kann-Generator-Bremsmoment kleiner als das aktuell mittels des mindestens einen Elektromotors ausgeübte Generator-Bremsmoment und/oder das angeforderte Soll-Gesamt-Bremsmoment ist, während des gemeinsamen Aktivierens der ersten Druckfördereinrichtung und der zweiten Druckfördereinrichtung das Druckablassventil des der generatorisch abbremsbaren Achse zugeordneten Bremskreises der beiden Bremskreise in den zumindest teilgeöffneten Zustand und das Druckablassventil des einer generatorisch nicht-abbremsbaren Achse zugeordneten Bremskreises der beiden Bremskreise in den geschlossenen Zustand zu steuern. Wie unten genauer ausgeführt ist, kann auf diese Weise ist eine ausgewogenere Bremskraftverteilung erreicht werden, wodurch eine Fahrzeugstabilität gesteigert wird.

Die oben ausgeführten Vorteile sind auch durch ein entsprechendes Ausführen des Verfahrens zum Betreiben eines hydraulischen Bremssystems eines Fahrzeugs realisierbar. Das Verfahren kann entsprechend den Ausführungsformen der Steuervorrichtung weitergebildet werden.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung von Ausführungsformen des Aggregats, des hydraulischen Bremssystems und der Steuervorrichtung;
- Fig. 2a bis 2e: fünf Koordinatensysteme zum Erläutern einer ersten Ausführungsform des Verfahrens zum Betreiben eines hydraulischen Bremssystems eines Fahrzeugs; und
- Fig. 3a bis 3e: fünf Koordinatensysteme zum Erläutern einer zweiten Ausführungsform des Verfahrens zum Betreiben eines hydraulischen Bremssystems eines Fahrzeugs.

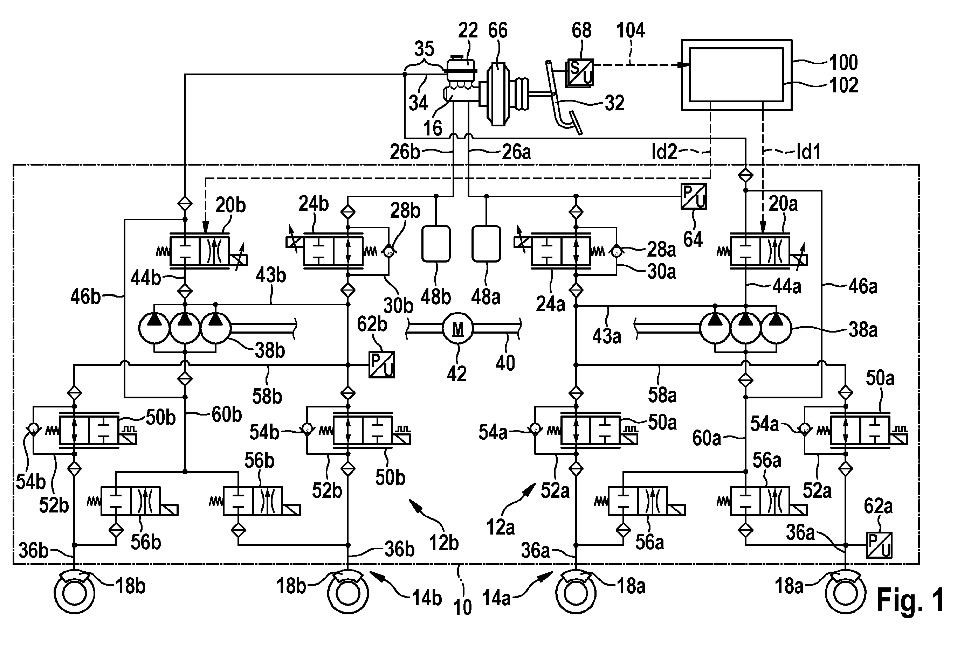

### Ausführungsformen der Erfindung Fig. 1 zeigt eine schematische Darstellung von Ausführungsformen des Aggregats, des hydraulischen Bremssystems und der Steuervorrichtung.

Das in Fig. 1 schematisch dargestellte Aggregat 10 ist in einem hydraulischen Bremssystem eines Fahrzeugs einsetzbar. Das Aggregat 10 kann als kompakte Einheit ausgebildet sein. Ebenso kann das Aggregat 10 jedoch auch aus mehreren voneinander trennbaren Einheiten zusammengesetzt sein. Des Weiteren kann das Aggregat 10 auch eine Untereinheit eines hydraulischen Bremssystems sein, welches nicht von diesem separierbar ist. Unter dem Aggregat 10 muss somit nicht eine aus dem hydraulischen Bremssystem wieder ausbaubare Einheit verstanden werden.

Das Aggregat 10 hat einen ersten Teilbremskreis 12a oder Bremskreis 14a, welcher an einem Hauptbremszylinder 16 des hydraulischen Bremssystems anbindbar oder angebunden ist. Außerdem ist der erste Teilbremskreis 12a oder Bremskreis 14a an mindestens einem ersten Radbremszylinder 18a anbindbar oder angebunden. Der erste Teilbremskreis 12a oder Bremskreis 14a kann insbesondere an zwei ersten Radbremszylindern 18a anbindbar oder angebunden sein. Des Weiteren umfasst der erste Teilbremskreis 12a oder Bremskreis 14a ein erstes Druckablassventil 20a, welches ausgangsseitig an ein Bremsflüssigkeitsreservoir 22 anbindbar oder angebunden ist.

Es wird darauf hingewiesen, dass der erste Teilbremskreis 12a oder Bremskreis 14a ein erstes Umschaltventil 24a aufweist, über welches der erste Teilbremskreis 12a oder Bremskreis 14a an dem Hauptbremszylinder 16 anbindbar oder angebunden ist. Beispielsweise kann eine erste Zufuhrleitung 26a zwischen einer (nicht dargestellten) Druckkammer des Hauptbremszylinders 16 und dem ersten Umschaltventil 24a verlaufen. Unter dem ersten Umschaltventil 24a ist insbesondere ein Ventil zu verstehen, welches ein Rückschlagventil 28a in einer parallel zu dem Umschaltventil 24a verlaufenden Bypassleitung 30a aufweist. Das Rückschlagventil 28a ist vorzugsweise so ausgerichtet, dass es mittels eines Drucks in dem Hauptbremszylinder 16 überdrückbar ist.

Das Aggregat 10 hat auch einen zweiten Teilbremskreis 12b oder Bremskreis 14b, welcher ebenfalls an dem Hauptbremszylinder 16 anbindbar oder angebunden ist. Zusätzlich ist der zweite Teilbremskreis 12b oder Bremskreis 14b an mindestens einem zweiten Radbremszylinder 18b anbindbar oder angebunden. Auch der zweite Teilbremskreis 12b oder Bremskreis 14b kann an zwei zweite Radbremszylinder 18b anbindbar oder angebunden sein. Ein zweites Druckablassventil 20b des zweiten Teilbremskreises 12b oder Bremskreises 14b ist ausgangsseitig an das Bremsflüssigkeitsreservoir 22 anbindbar oder angebunden.

Der zweite Teilbremskreis 12b oder Bremskreis 14b umfasst ein zweites Umschaltventil 24b, über welches der zweite Teilbremskreis 12b oder Bremskreis 14b an dem Hauptbremszylinder 16 anbindbar oder angebunden ist. Insbesondere kann eine zweite Zufuhrleitung 26b zwischen einer (nicht dargestellten) weiteren Druckkammer des Hauptbremszylinders 16 und dem zweiten Umschaltventil 24b des zweiten Teilbremskreises 12b oder Bremskreises 14b verlaufen. Auch unter dem zweiten Umschaltventil 24b kann ein Ventil verstanden werden, welches ein Rückschlagventil 28b in einer parallel zu dem Umschaltventil 24b verlaufenden Bypassleitung 30b aufweist. Bevorzugt wird eine Ausrichtung des Rückschlagventils 28b, welche eine Unterdrückung des zweiten Rückschlagventils 28b mittels eines Drucks in dem Hauptbremszylinder 16 erlaubt.

Unter dem ersten Teilbremskreis 12a kann beispielsweise ein Bereich des ersten Bremskreises 14a verstanden werden, welcher innerhalb des Aggregats 10 liegt. Ansonsten können die Begriffe erster Teilbremskreis 12a und erster Bremskreis 14a auch als gleichbedeutend interpretiert werden. Entsprechend kann auch unter dem zweiten Teilbremskreis 12b ein innerhalb des Aggregats 10 liegender Bereich des zweiten Bremskreises 14b verstanden werden. Andernfalls können die Begriffe zweiter Teilbremskreis 12b und zweiter Bremskreis 14b gleich gedeutet werden.

Vorzugsweise sind das erste Druckablassventil 20a und/oder das zweite Druckablassventil 20b jeweils ein stetig stellbares/stetig steuerbares/stetig regelbares Ventil. Es wird jedoch darauf hingewiesen, dass die Ausbildbarkeit der Druckablassventile 20a und 20b nicht auf einen bestimmten Ventiltyp limitiert ist. Unter dem Bremsflüssigkeitsreservoir 22 kann ein Volumen verstanden werden, in welchem der Atmosphärendruck vorliegt und/oder welches über mindestens eine Austauschbohrung, wie beispielsweise eine Schnüffelbohrung, mit dem Hauptbremszylinder 16 hydraulisch verbunden ist.

Der Fahrer des mit dem Aggregat 10/dem hydraulischen Bremssystem ausgestatteten Fahrzeugs hat die Möglichkeit, mittels einer Betätigung eines an dem Hauptbremszylinder 16 angebundenen Bremsbetätigungselements 32 jederzeit direkt in den (zumindest den ersten Teilbremskreis 12a umfassenden) ersten Bremskreis 14a und/oder in den (zumindest den zweiten Teilbremskreis 12b umfassenden) zweiten Bremskreis 14b einzubremsen. Gleichzeitig können das erste Druckablassventil 20a und/oder das zweite Druckablassventil 20b jeweils dazu genutzt werden, Bremsflüssigkeit/Volumen aus dem ersten Bremskreis 14a und/oder aus dem zweiten Bremskreis 14b in das Bremsflüssigkeitsreservoir 22 abzulassen. Somit bietet das Aggregat 10/das hydraulische Bremssystem die Vorteile einer wahlweisen Reduzierbarkeit eines in dem ersten Bremskreis 14a vorliegenden ersten Bremsdrucks und/oder eines zweiten Bremsdrucks in dem zweiten Bremskreis 14b ohne eine Auslegung der Bremskreise 14a und 14b als By-Wire-Bremskreise. Somit können die Vorteile der wahlweisen Reduzierbarkeit des ersten Bremsdrucks und/oder des zweiten Bremsdrucks genutzt werden, ohne dass dazu die Nachteile/Probleme von By-Wire-Bremskreisen in Kauf zu nehmen sind.

Das erste Druckablassventil 20a/der erste Teilbremskreis 12a kann beispielsweise über eine Saugleitung 34 mit dem Bremsflüssigkeitsreservoir 22 verbunden sein. Bevorzugter Weise ist die Saugleitung 34 so ausgebildet, dass beide Druckablassventile 20a und 20b, bzw. der erste Teilbremskreis 12a oder Bremskreis 14a und der zweite Teilbremskreis 12b oder Bremskreis 14b, über einen gemeinsamen Saugleitungsabschnitt 35 mit dem Bremsflüssigkeitsreservoir 22 verbunden sind. Man kann die Saugleitung 34 in diesem Fall auch als zwei ineinander einmündende Saugleitungsabschnitte umschreiben. Eine derartige Ausbildung der Saugleitung 34 gewährleistet den Vorteil, dass bei der Montage des Bremssystems an einem Fahrzeug nur die gemeinsame Saugleitung 34 von dem Aggregat 10/dem ESP-System zum Bremsflüssigkeitsreservoir 22 zu verlegen ist. Die beiden Druckablassventile 20a und 20b können jedoch auch über je eine eigene Saugleitung mit dem Bremsflüssigkeitsreservoir 22 verbunden sein.

Mindestens eine Leitung 36a kann von dem Aggregat 10/dem ersten Teilbremskreis 12a zu dem mindestens einen ersten Radbremszylinder 18a verlaufen. Die Anbindung des ersten Teilbremskreises 12a an die Komponenten 16, 18a und 22 mittels der Leitungen 26a, 34 und 36a ist jedoch nur beispielhaft zu verstehen. Über mindestens eine Leitung 36b kann das Aggregat 10/der zweite Teilbremskreis 12b mit dem mindestens einen zweiten Radbremszylinder 18b verbunden sein. Die Ausbildbarkeit des zweiten Teilbremskreises 12b/zweiten Bremskreises 14b ist jedoch nicht auf die Ausstattung mit den Leitungen 26b, 34 und 36b limitiert.

Vorzugsweise umfasst der erste Teilbremskreis 12a oder Bremskreis 14a eine erste Druckfördereinrichtung 38a, welche saugseitig an das Bremsflüssigkeitsreservoir 22 anbindbar oder angebunden ist. Ebenso kann der zweite Teilbremskreis 12b oder Bremskreis 14b eine zweite Druckfördereinrichtung 38b haben, welche saugseitig ebenfalls an das Bremsflüssigkeitsreservoir 22 anbindbar oder angebunden ist. Da der Fahrer in beide Bremskreise 14a und 14b einbremsen kann, ist die hydraulische Last der Druckfördereinrichtungen 38a und 38b, bzw. ihres Motors 42, besonders bei einer NichtVerfügbarkeit eines generatorisch einsetzbaren Elektromotors gegenüber einem Brake-By-Wire- oder einem Einachs-Brake-By-Wire-Bremssystems deutlich reduziert. Somit können kostengünstige Druckfördereinrichtungen 38a und 38b werden.

Jede der Druckfördereinrichtungen 38a und 38b kann z.B. eine Pumpe 38a und 38b, wie insbesondere eine Dreikolbenpumpe, sein. Die beiden Pumpen 38a und 38b können an einer gemeinsamen Welle 40 eines Motors 42 angeordnet sein. Von den Förderseiten der Pumpen 38a und 38b kann je eine Leitung 43a und 43b zu dem zugeordneten Umschaltventil 24a und 24b verlaufen. Außerdem können die Förderseiten der Pumpen 38a und 38b über je eine weitere Leitung 44a oder 44b eingangsseitig mit dem zugeordneten Druckablassventil 20a oder 20b verbunden sein. Über je eine parallel zu dem jeweiligen Druckablassventil 20a oder 20b verlaufende weitere Leitung 46a oder 46b können die Ansaugseiten der Pumpen 38a und 38b zusätzlich mit der Ansaugleitung 34 verbunden sein. Die Ausbildbarkeit der Druckfördereinrichtungen 38a und 38b ist jedoch nicht auf eine Pumpe 38a und 38b, einen bestimmten Pumpentyp oder auf eine spezielle Anbindung der mindestens einen Pumpe 38a und 38b limitiert.

Bevorzugter Weise umfassen der erste Teilbremskreis 12a oder Bremskreis 14a einen ersten Pulsationsdämpfer 48a und/oder der zweite Teilbremskreis 12b oder Bremskreis 14b einen zweiten Pulsationsdämpfer 48b. Die Pulsationsdämpfer 48a und 48b können insbesondere eingangsseitig an dem zugeordneten Umschaltventil 24a oder 24b/an der jeweiligen Zufuhrleitung 26a oder 26b angebunden sein. Durch die Anordnung der Pulsationsdämpfer 48a und 48b an den Primärkreisen beider Bremskreise 14a und 14b ist es möglich, den Fahrer von Pulsationen der Rückförderhydraulik der Druckfördereinrichtungen 38a und 38b zu entkoppeln. Dazu können die Pulsationsdämpfer 48a und 48b sowohl Saug- als auch Druckpulsationen dämpfen.

Die Ausstattung des Aggregats 10 und/oder des hydraulischen Bremssystems mit den im Weiteren beschriebenen vorteilhaften Komponenten ist lediglich optional:
Bei dem Aggregat 10/dem hydraulischen Bremssystem der Fig. 1 ist jedem Radbremszylinder 18a und 18b ein Radeinlassventil 50a oder 50b zugeordnet, welches über die jeweilige Leitung 36a oder 36b mit diesem verbunden ist. Parallel zu jedem Radeinlassventil 50a und 50b verläuft je eine Bypassleitung 52a oder 52b mit je einem Rückschlagventil 54a oder 54b. Über eine Aufgabelung der jeweiligen Leitung 36a und 36b ist auch je ein Radauslassventil 56a und 56b jedem Radbremszylinder 18a und 18b zugeordnet.
Bei einer Ausbildung der Bremskreise 14a und 14b für die Anbindung von je zwei Radbremszylindern 18a oder 18b können die beiden Radeinlassventile 50a oder 50b eines Bremskreises 14a oder 14b über jeweils eine sich aufzweigende Leitung 58a oder 58b an das zugeordnete Umschaltventil 24a oder 24b, bzw. die Leitung 43a oder 43b, angebunden sein. Die beiden Radauslassventile 56a oder 56b eines Bremskreises 14a oder 14b können ebenfalls über eine sich aufzweigende Leitung 60a oder 60b an eine Saugseite der ersten Pumpe 38a des ersten Bremskreises 14a oder der zweiten Pumpe 38b des zweiten Bremskreises 14b angebunden sein.

Jeder der beiden Bremskreise 14a und 14b kann mit einem Drucksensor 62a oder 62b ausgestattet sein. Optionaler Weise kann der erste Bremskreis 14a noch einen Vordrucksensor 64 haben. Die Ausbildbarkeit des hydraulischen Bremssystems/des Aggregats 10 ist jedoch nicht auf die Ausstattung mit den in Fig. 1 dargestellten Sensoren 62a, 62b und 64 limitiert.

Das Bremssystem der Fig. 1 weist einen Bremskraftverstärker 66 auf, welcher zwischen dem als Bremspedal ausgebildeten Bremsbetätigungselement 32 und dem Hauptbremszylinder 16 angeordnet ist. Vorteilhafter Weise ist das Bremssystem mit einem aktiven Bremskraftverstärker, wie beispielsweise einem elektromechanischen Bremskraftverstärker, ausgestattet. Jedoch ist auch ein anderer Typ eines Bremskraftverstärkers 66, wie z.B. ein Vakuumbremskraftverstärker, in dem Bremssystem einsetzbar. Außerdem hat das Bremssystem noch einen Bremsbetätigungselement-Sensor 68, mittels welchem ein Verstellweg des Bremsbetätigungselements 32 aus seiner Ausgangsstellung und/oder eine Betätigungsstärke einer Betätigung des Bremsbetätigungselements 32 ermittelbar/messbar ist. Der Bremsbetätigungselement-Sensor 68 kann beispielsweise ein Fahrerbremskraftsensor, ein Fahrerbremsdrucksensor und/oder ein Bremsbetätigungswegsensor, wie insbesondere ein Stangenwegsensor, sein. Die Ausbildbarkeit des Bremsbetätigungselement-Sensors 68 ist jedoch nicht auf die hier aufgezählten Sensortypen limitiert. Ebenso ist die Ausstattung des hydraulischen Bremssystems mit dem Bremskraftverstärker 66 und/oder dem Bremsbetätigungselement-Sensor 68 optional.

In Fig. 1 ist auch eine Steuervorrichtung 100 schematisch dargestellt, welche zum Zusammenwirken mit dem hydraulischen Bremssystem ausgebildet ist. Die Steuervorrichtung 100 weist eine Ansteuereinrichtung 102 auf, welche dazu ausgelegt ist, zumindest das erste Druckablassventil 20a des ersten Bremskreises 14a und das zweite Druckablassventil 20b des zweiten Bremskreises 14b mit mindestens einem Druckablassventilsteuersignal Id1 und Id2 anzusteuern. Das Ansteuern der Druckablassventile 20a und 20b erfolgt unter Berücksichtigung zumindest eines bereitgestellten Sensorsignals 104 des Bremsbetätigungselements-Sensors 68. Die Ansteuereinrichtung 102 ist vor allem dazu ausgelegt, die Druckablassventile 20a und 20b in einem zumindest teilgeöffneten Zustand (z.B. in dem vollständig geöffneten Zustand) zu steuern, so dass zumindest zeitweise während einer Betätigung des an dem Hauptbremszylinder 16 angebundenen Bremsbetätigungselements 32 Bremsflüssigkeit aus dem ersten Bremskreis 14a in das ausgangsseitig an dem ersten Druckablassventil 20a angebundene Bremsflüssigkeitsreservoir 22 und/oder aus dem zweiten Bremskreis 14b in das ausgangsseitig an dem zweiten Druckablassventil 20b angebundene Bremsflüssigkeitsreservoir 22 verschiebbar ist.

Die Steuervorrichtung 100 kann somit zum wahlweisen Reduzieren des in dem ersten Bremskreis 14a vorliegenden ersten Bremsdrucks und/oder des in dem zweiten Bremskreis 14b vorliegenden zweiten Bremsdrucks eingesetzt werden. Dies ist auch als eine Einsetzbarkeit der Steuervorrichtung 100 zum wahlweisen Begrenzen/Verhindern eines Bremsdruckaufbaus in dem ersten Bremskreis 14a und/oder dem zweiten Bremskreis 14b umschreibbar. Insbesondere kann die Steuervorrichtung 100 dazu genutzt werden, sicherzustellen, dass trotz einer Betätigung des Bremsbetätigungselements 32, durch welche Bremsflüssigkeit aus dem Hauptbremszylinder 16 in den ersten Bremskreis 14a und in dem zweiten Bremskreis 14b verschoben wird, (nahezu) kein Bremsdruckaufbau in dem mindestens einen ersten Radbremszylinder 18a des ersten Bremskreises 14a und/oder in dem mindestens einen zweiten Radbremszylinder 18b des zweiten Bremskreises 14b stattfindet.

Stattdessen kann durch das zumindest teilweise Öffnen des ersten Druckablassventils 20a eine dem aus dem Hauptbremszylinder 16 in den ersten Bremskreis 14a verschobenen Volumen (nahezu) entsprechende Bremsflüssigkeitsmenge in das Bremsflüssigkeitsreservoir 22 zurücktransferiert werden. Als Alternative oder als Ergänzung dazu kann auch durch das zumindest teilweise Öffnen des zweiten Druckablassventils 20b eine Bremsflüssigkeitsmenge, welche (nahezu) dem aus dem Hauptbremszylinder 16 in den zweiten Bremskreis 14b verschobenen Volumen entspricht, in das Bremsflüssigkeitsreservoir 22 zurücktransferiert werden.

Obwohl die Bremskreise 14a und 14b nicht als By-Wire-Bremskreise ausgebildet sind, können die darin vorliegenden Bremsdrücke bremskreisspezifisch und abweichend vom Druck in dem Hauptbremszylinder 16 eingestellt werden, indem die Umschaltventile 20a und 20b in einen zumindest teilgeschlossenen/vollständig geschlossenen Zustand gebracht werden. Entsprechend sind auch ein erstes Reib-Bremsmoment des mindestens einen ersten Radbremszylinders 18a des ersten Bremskreises 14a und ein zweites Reib-Bremsmoment des mindestens einen zweiten Radbremszylinders 18b des zweiten Bremskreises 14b bremskreisspezifisch und abweichend vom Druck in dem Hauptbremszylinder 16 einstellbar.

Vorteilhafterweise kann eine mittels der Steuervorrichtung 100 ausführbare Reduzierung der Reib-Bremsmomente der Radbremszylinder 18a und 18b zum Einsetzen mindestens eines Elektromotors als Generator zum Abbremsen des Fahrzeugs genutzt werden. Eine auf diese Weise gewonnene elektrische Energie kann in eine Batterie zurückgespeist werden. Insbesondere kann durch das Reduzieren der Reib-Bremsmomente der Radbremszylinder 18a und 18b mittels der Steuervorrichtung 100 ein vergleichsweise großes Generator-Bremsmoment des mindestens einen Elektromotors zum Abbremsen des Fahrzeugs ausgeübt werden, ohne dass ein von dem Fahrer vorgegebenes (Soll-)Gesamt-Bremsmoment/eine entsprechende Soll-Fahrzeugverzögerung überschritten wird. Die Steuervorrichtung 100 kann somit dazu eingesetzt werden, eine möglichst hohe rekuperative Effizienz während des Abbremsens des mit dem Aggregat 10/dem hydraulischen Bremssystem ausgestatteten Fahrzeugs zu erzielen. Die Steuervorrichtung 100 trägt somit zur Reduzierung des Kraftstoffverbrauchs und zur Verringerung der Schadstoffemission während einer Fahrt des damit ausgestatteten Fahrzeugs vorteilhaft bei. Der mindestens eine Elektromotor ist häufig auch als elektrischer Antriebsmotor des Fahrzeugs nutzbar.

Die Steuervorrichtung 100 eignet sich damit besonders gut für eine Verwendung in einem Hybridfahrzeug oder in einem Elektrofahrzeug. Die Einsetzbarkeit der Steuervorrichtung 100 ist jedoch nicht auf einen bestimmten Fahrzeugtyp limitiert.

In einer vorteilhaften Ausführungsform der Steuervorrichtung 100 ist die Ansteuereinrichtung 102 dazu ausgelegt, sofern eine als zumindest Teil des Sensorsignals 104 bereitgestellte Größe bezüglich eines Verstellwegs des betätigten Bremsbetätigungselements 32 aus seiner Ausgangsstellung und/oder bezüglich einer Betätigungsstärke der Betätigung des Bremsbetätigungselements 32 kleiner als eine vorgegebene Grenz-Größe ist, das erste Druckablassventil 20a und das zweite Druckablassventil 20b zumindest zeitweise derart in den zumindest teilgeöffneten Zustand zu steuern, dass der in dem ersten Bremskreis 14a vorliegende erste Bremsdruck und der in dem zweiten Bremskreis 14b vorliegende zweite Bremsdruck (nahezu) gleich dem Druck in dem Bremsflüssigkeitsreservoir 22 sind. Die als zumindest Teil des Sensorsignals 104 bereitgestellte Größe kann z.B. eine Fahrerbremskraft, ein Bremsbetätigungsverstellweg oder ein Bremsbetätigungsdruck sein.

Insbesondere kann die Ansteuereinrichtung 102 dazu ausgelegt sein, bei einer zunehmenden Größe kleiner als der vorgegebenen Grenz-Größe die Druckablassventile 20a und 20b immer in den zumindest teilgeöffneten Zustand, vorzugsweise in den vollständig geöffneten Zustand, zu steuern. Außerdem kann die Ansteuereinrichtung 102 zusätzlich dazu ausgelegt sein, sofern die Größe größer als die vorgegebene Grenz-Größe ist, das erste Druckablassventil 20a und das zweite Druckablassventil 20b jeweils in einen geschlossenen Zustand zu steuern.

In diesem Fall realisiert die Steuervorrichtung einen "nicht-mechanischen" Leerweg.

Durch das auf diese Weise bewirkbare Unterbinden/Verhindern von Reib-Bremsmomenten der Radbremszylinder 18a und 18b ungleich Null sind hohe rekuperative Effizienzen gewährleistbar. Der "nicht-mechanische" Leerweg gewährleistet somit, dass bei einem Verstellweg des Bremsbetätigungselements 32 unter dem Leerweg (Jump-In) und/oder einer Fahrerbremskraft/einem Bremsbetätigungsdruck unter einem Schwellwert, die Verzögerung des Fahrzeugs (nahezu) rein regenerativ erfolgt. Somit kann die vom Fahrer angeforderte Verzögerung vollständig zum Aufladen der Batterie genutzt werden.

Im Gegensatz zu einem herkömmlichen mechanischen Leerweg, welcher über die Ausbildung/Anbindung des Bremsbetätigungselements 32 mechanisch ausgebildet ist, ist die Umsetzung des "nicht-mechanischen" Leerwegs mit keinerlei baulichem Aufwand verbunden. Der "nicht-mechanische" Leerweg benötigt keinerlei Aktuationskomponenten/mechanische Komponenten, deren Spezifikationen bezüglich der Länge des Leerwegs anzupassen sind. Stattdessen kann bei einem Einsetzen der Steuervorrichtung 100 mit dem Aggregat 10/Bremssystem die gleiche mechanische Anbindung des Bremsbetätigungselements 32/des Bremskraftverstärkers 66 unabhängig von einer Länge des "nicht-mechanischen" Leerwegs genutzt werden. Die Länge des "nicht-mechanischen" Leerwegs kann über eine einfache Umprogrammierung/Umschaltung der Steuervorrichtung 100 variiert werden. Insbesondere können die gleichen Bremsbetätigungselemente 32, Bremskraftverstärker 66 und/oder Hauptbremszylinder 16 an hybriden und nicht-hybriden Bremssystemen verwendet werden. Somit kann die Steuervorrichtung 100 dazu genutzt werden, gleiche Typen von Bremsbetätigungselementen 32, Bremskraftverstärkern 66 und/oder Hauptbremszylindern 16 an Bremssysteme mit verschieden-langen Leerwegen anzubinden. Die Steuervorrichtung 100 reduziert somit die Kosten zur Herstellung und zur Montage verschiedener Typen von hydraulischen Bremssystemen durch die Möglichkeit zur Verwendung der gleichen Aktuationskomponenten in hybriden und nicht-hybriden Fahrzeugvarianten.

Durch eine mittels der Steuervorrichtung 100 leicht realisierbare zusätzliche Verlängerung des "nicht-mechanischen" Leerwegs ist es außerdem möglich, in allen Verzögerungsbereichen eine rekuperative Effizienz von (nahezu) 100% darzustellen. Gleichzeitig kann bei einem Einsatz der Steuervorrichtung 100 auf die Verwendung eines Brake-By-Wire-Bremssystems oder eines Einachs-Brake-By-Wire-Bremssystems verzichtet werden.

In einer vorteilhaften Weiterbildung ist die Ansteuereinrichtung 102 zusätzlich dazu ausgelegt, unter Berücksichtigung zumindest einer bereitgestellten Information bezüglich eines mittels des mindestens einen Elektromotors aktuell maximal ausführbaren Kann-Generator-Bremsmoments mindestens die erste Druckfördereinrichtung 38a des ersten Bremskreises 14a und/oder die zweite Druckfördereinrichtung 38b des zweiten Bremskreises 14b anzusteuern. Auf diese Weise kann, sofern das Kann-Generator-Bremsmoment (in absehbarer Zeit) kleiner als ein aktuell mittels des mindestens einen Elektromotors ausgeführtes Generator-Bremsmoment und/oder ein von einem Fahrer und/oder einem automatischen Geschwindigkeitssteuersystem angefordertes Soll-Gesamt-Bremsmoment ist/wird, der erste Bremsdruck in dem ersten Bremskreis 14a mittels der mindestens einen von einem ersten Pumpensteuersignal Ip1 angesteuerten ersten Druckfördereinrichtung 38a und/oder der zweite Bremsdruck in dem zweiten Bremskreis 14b mittels der mindestens einen von dem ersten Pumpensteuersignal Ip1 oder einem zweiten Pumpensteuersignal Ip2 angesteuerten zweiten Druckfördereinrichtung 38b steigerbar sein.

Die Steuervorrichtung 100 realisiert somit auch eine Förderhydraulik zum wahlweisen Einbringen eines Volumens von Bremsflüssigkeit in den ersten Bremskreis 14a mittels der ersten Druckfördereinrichtung 38a und/oder in den zweiten Bremskreis 14b mittels der zweiten Druckfördereinrichtung 38b. Dieses zusätzlich eingebrachte Volumen kann dazu genutzt werden, eine entfallende Einsetzbarkeit des mindestens einen Elektromotors, beispielsweise aufgrund einer Fahrzeuggeschwindigkeit unter einer das generatorische Betreiben des mindestens einen Elektromotors noch erlaubenden MindestGeschwindigkeit und/oder einer vollständigen Aufladung der Batterie, zu kompensieren. Wahlweise können alle Radbremszylinder 18a und 18b zum Kompensieren der entfallenden Einsetzbarkeit des mindestens einen Elektromotors genutzt werden.

Die Steuervorrichtung 100 kann auch zum zusätzlichen Ansteuern mindestens eines der Ventile 24a, 24b, 50a, 50b, 56a und 56b und/oder des Bremskraftverstärkers 66 ausgelegt sein. Außerdem kann die Steuervorrichtung 100 in ein ESP-System oder in ein anderes Steuergerät integriert sein.

In einer vorteilhaften Anwendung des Bremssystems können die zwei Radbremszylinder 18a des ersten Bremskreises 14a einer gemeinsamen Achse, insbesondere der Vorderachse des Fahrzeugs, zugeordnet sein. In diesem Fall sind die beiden Radbremszylinder 18b des zweiten Bremskreises 14b der Hinterachse des Fahrzeugs zugeordnet. Das in Fig. 1 dargestellte Bremssystem ist jedoch nicht auf eine derartige Zuordnung der Radbremszylinder 18a und 18b limitiert. Ebenso ist das Bremssystem nicht auf eine parallele Bremskreisaufteilung (II-Bremskreisaufteilung) beschränkt. Beispielsweise kann das Bremssystem auch für eine X-Bremskreisaufteilung genutzt werden.

Bevorzugter Weise ist die Ansteuereinrichtung 102 bei einer parallelen Bremskreisaufteilung des zusammenwirkenden hydraulischen Bremssystems zusätzlich dazu ausgelegt, sofern das mittels des mindestens einen Elektromotors auf nur eine generatorisch abbremsbare Achse aktuell maximal ausführbare Kann-Generator-Bremsmoment kleiner als das aktuell mittels des mindestens einen Elektromotors ausgeübte Generator-Bremsmoment und/oder das angeforderte Soll-Gesamt-Bremsmoment ist, während des gemeinsamen Aktivierens der ersten Druckfördereinrichtung 38a und der zweiten Druckfördereinrichtung 28b das Druckablassventil 20a oder 20b des der generatorisch abbremsbaren Achse zugeordneten Bremskreises 14a oder 14b der beiden Bremskreise 14a und 14b in den zumindest teilgeöffneten Zustand und das Druckablassventil 20a oder 20b des einer generatorisch nicht-abbremsbaren Achse zugeordneten Bremskreises 14a oder 14b der beiden Bremskreise 14a und 14b in den geschlossenen Zustand zu steuern. Sofern beispielsweise das Generator-Bremsmoment ausschließlich auf die Vorderachse als der generatorisch abbremsbaren Achse ausgeübt wird und der erste Bremskreis 14a der Vorderachse zugeordnet ist, können während eines gemeinsamen Betreibens beider Druckfördereinrichtungen/Pumpen 38a und 38b das erste Druckablassventil 20a des ersten Bremskreises 14a in den (vorzugsweise vollständig) geöffneten Zustand und das zweite Druckablassventil 20b des zweiten Bremskreises 14b, welcher der Hinterachse zugeordnet ist, in den geschlossenen Zustand gesteuert werden. Somit kann trotz des gemeinsamen Betreibens beider Druckfördereinrichtungen/Pumpen 38a und 38b der Druckaufbau auf den zweiten Bremskreises 14b begrenzt werden. Auf diese Weise ist eine stabilisierende Bremskraftverteilung erreichbar.

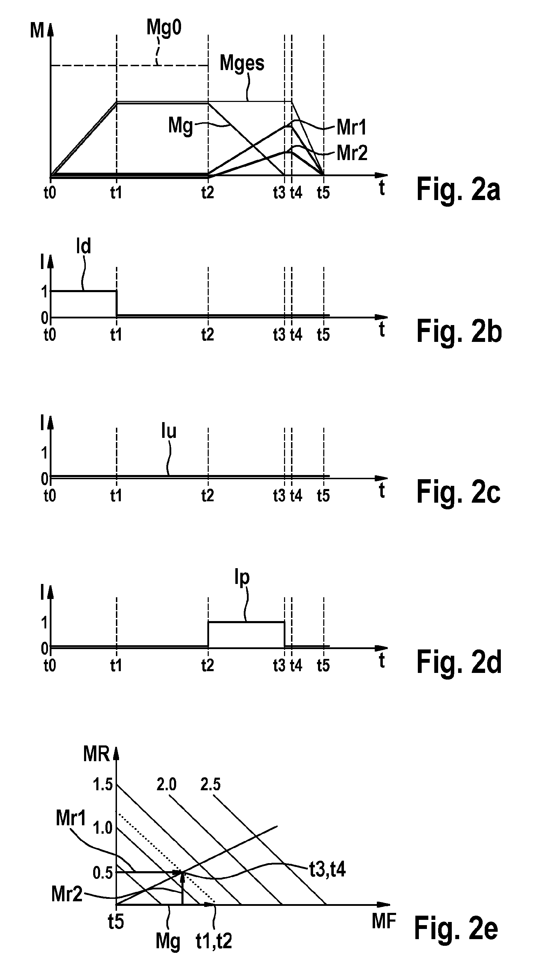

Fig. 2a bis 2e zeigen fünf Koordinatensysteme zum Erläutern einer ersten Ausführungsform des Verfahrens zum Betreiben eines hydraulischen Bremssystems eines Fahrzeugs. Die Abszissen der Koordinatensysteme der Fig. 2a bis 2d sind die Zeitachse t. Die Ordinate des Koordinatensystems der Fig. 2a ist ein Bremsmoment M. Mittels der Ordinaten der Koordinatensysteme der Fig. 2b bis 2d sind normierte Stromstärken I wiedergegeben. Die Abszisse des Koordinatensystems der Fig. 2e ist ein insgesamt auf eine Vorderachse und/oder die daran angebundenen Vorderräder ausgeübtes Vorderachs-Bremsmoment MF. Die Ordinate des Koordinatensystems der Fig. 2e gibt ein auf eine Hinderachse und/oder die daran angeordneten Hinderräder ausgeübtes Hinterachs-Bremsmoment MR wieder.

Bei der hier dargestellten Ausführungsform des Verfahrens verfügt das Fahrzeug über mindestens einen als Generator einsetzbaren Elektromotor, welcher nur auf die Vorderachse einwirkt. Die Radbremszylinder eines ersten Bremskreises des hydraulischen Bremssystems sind der Vorderachse zugeordnet, während die Radbremszylinder eines zweiten Bremskreis des hydraulischen Bremssystems auf die Hinterachse/Hinterräder einwirken können. Das Vorderachs-Bremsmoment MF ist somit mittels des mindestens einen Elektromotors und/oder mittels der Radbremszylinder des ersten Bremskreises ausübbar, während das Hinterachs-Bremsmoment MR nur mittels der Radbremszylinder des zweiten Bremskreises bewirkt werden kann.

Das im Weiteren beschriebene Verfahren kann beispielsweise mittels des oben ausgeführten hydraulischen Bremssystems und/oder mittels der erläuterten Steuervorrichtung durchgeführt werden. Die Ausführbarkeit des Verfahrens ist jedoch nicht auf die Verwendung eines derartigen hydraulischen Bremssystems und/oder der Steuervorrichtung limitiert.

Bei einem Ausführen des Verfahrens werden ein erstes Druckablassventil des ersten Bremskreises des hydraulischen Bremssystems, welcher über ein erstes Umschaltventil des ersten Bremskreises an einem Hauptbremszylinder des hydraulischen Bremssystems angebunden ist und mindestens einen ersten Radbremszylinder aufweist, und ein zweites Druckablassventil des zweiten Bremskreises des hydraulischen Bremssystems, welcher über ein zweites Umschaltventil des zweiten Bremskreises an dem Hauptbremszylinder angebunden ist und mindestens einen zweiten Radbremszylinder aufweist, jeweils in einen zumindest teilgeöffneten Zustand zumindest zeitweise während einer Betätigung eines an dem Hauptbremszylinder angebundenen Bremsbetätigungselements gesteuert. Dies geschieht zum Verschieben von Bremsflüssigkeit aus dem ersten Bremskreis in ein ausgangsseitig an dem ersten Druckablassventil angebundenes Bremsflüssigkeitsreservoir und zum Verschieben von Bremsflüssigkeit aus dem zweiten Bremskreis in das ausgangsseitig an dem zweiten Druckablassventil angebundene Bremsflüssigkeitsreservoir.

Der in dem vorausgehenden Absatz beschriebene Vorgang wird beispielsweise zwischen den Zeiten t0 und t1 ausgeführt. Vor dem Zeitpunkt t0 betätigt ein Fahrer des mit dem hydraulischen Bremssystem ausgestatteten Fahrzeugs das Bremsbetätigungselement nicht. Ab dem Zeitpunkt t0 betätigt der Fahrer das Bremsbetätigungselement und verschiebt auf diese Weise Bremsflüssigkeit aus dem Hauptbremszylinder teilweise in den ersten Bremskreis und teilweise in den zweiten Bremskreis. Allerdings werden zwischen den Zeiten t0 und t1 die beiden Druckablassventile in den geöffneten Zustand gesteuert, so dass das aus dem Hauptbremszylinder in den ersten Bremskreis geschobene Volumen über die durch das geöffnete erste Druckablassventil in das Bremsflüssigkeitsreservoir transferierte Bremsflüssigkeitsmenge und das aus dem Hauptbremszylinder in den zweiten Bremskreis geschobene Volumen aufgrund der über das geöffnete zweite Druckablassventil in das Bremsflüssigkeitsreservoir transferierten Bremsflüssigkeitsmenge (nahezu) ausgeglichen werden.

Sofern die Druckablassventile jeweils als stromlos geschlossenes Ventil ausgebildet sind, kann zum Öffnen der Druckablassventile ein (gemeinsames) Druckablassventilsteuersignal Id ungleich Null zwischen den Zeiten t0 und t1 an die Druckablassventile bereitgestellt werden. (Ebenso können jedoch auch unabhängige Druckablassventilsteuersignale zwischen den Zeiten t0 und t1 an die Druckablassventile bereitgestellt werden.) Die Ausbildung der Druckablassventile als stromlos geschlossene Ventile ist jedoch optional.

Obwohl der Fahrer zwischen den Zeiten t0 und t1 ein steigerndes (Soll-)Gesamt-Bremsmoment Mges anfordert, bleiben ein in dem ersten Bremskreis vorliegender erster Bremsdruck und ein in dem zweiten Bremskreis vorliegender zweiter Bremsdruck (nahezu) gleich Null. Deshalb ist auch ein mittels des mindestens einen ersten Radbremszylinders des ersten Bremskreises auf mindestens ein Rad/Vorderrad ausgeübtes erstes Reib-Bremsmoment Mr1 zwischen den Zeiten t0 und t1 (nahezu) gleich Null. Entsprechend ist zwischen den Zeiten t0 und t1 auch ein von dem mindestens einen zweiten Radbremszylinder des zweiten Bremskreises bewirktes zweites Reib-Bremsmoment Mr2 (nahezu) gleich Null.

Die beiden Umschaltventile der Bremskreise können zwischen den Zeiten t0 und t1 offen gehalten werden. Bei einer Ausbildung des ersten Umschaltventils/zweiten Umschaltventils als stromlos offenes Ventil kann beispielsweise ein Umschaltventilsteuersignal lu gleich Null zwischen den Zeiten t0 und t1 an die Umschaltventile bereitgestellt werden. (Ebenso können jedoch auch unabhängige Umschaltventilsteuersignale gleich Null zwischen den Zeiten t0 und t1 an die Umschaltventile bereitgestellt werden.)

Die entfallene Bremswirkung der Radbremszylinder der beiden Bremskreise kann zum generatorischen Einsetzen des mindestens einen Elektromotors genutzt werden. Somit ist zwischen den Zeiten t0 und t1, sofern ein maximal ausführbares Kann-Generator-Bremsmoment Mg0 größer als das von dem Fahrer angeforderte Gesamt-Bremsmoment Mges ist, ein Generator-Bremsmoment Mg (ungefähr) gleich dem Gesamt-Bremsmoment Mges ausführbar. Die von dem Fahrer angeforderte Fahrzeugverzögerung kann zwischen den Zeiten t0 und t1 rein rekuperativ ausgeführt werden.

In einer besonders vorteilhaften Ausführungsform des Verfahrens werden, sofern ein Verstellweg des betätigten Bremsbetätigungselements aus seiner Ausgangsstellung kleiner als ein vorgegebener Grenz-Verstellweg ist und/oder eine Betätigungsstärke der Betätigung des Bremsbetätigungselements kleiner als eine vorgegebene Grenz-Betätigungsstärke ist, das erste Druckablassventil und das zweite Druckablassventil derart zumindest zeitweise in den zumindest teilgeöffneten Zustand gesteuert, dass der in dem ersten Bremskreis vorliegende erste Bremsdruck und der in dem zweiten Bremskreis vorliegende zweite Bremsdruck gleich einem Druck in dem Bremsflüssigkeitsreservoir sind. Insbesondere können bei einem zunehmenden Verstellweg größer Null aber kleiner als der Grenz-Verstellweg und/oder bei einer steigenden Betätigungsstärke größer Null doch kleiner als die Grenz-Betätigungsstärke beide Druckablassventile zumindest in den teilgeöffneten Zustand, vorzugsweise in den vollständig geöffneten Zustand, gesteuert werden. Außerdem können, sofern der Verstellweg des betätigten Bremsbetätigungselements aus seiner Ausgangsstellung größer als der vorgegebene Grenz-Verstellweg ist und/oder die Betätigungsstärke der Betätigung des Bremsbetätigungselements größer als die vorgegebene Grenz-Betätigungsstärke ist, das erste Druckablassventil und das zweite Druckablassventil in einem geschlossenen Zustand gesteuert werden.

Somit kann auch mittels des Verfahrens der oben schon erläuterte "nicht-mechanische" Leerweg realisiert werden. Dieser kann vorteilhafter Weise im Jump-in-Bereich realisiert werden, innerhalb welchem der Fahrer keine Rückwirkung am Bremsbetätigungselement (Pedalrückwirkungen) spürt. Außerhalb des Jump-in-Bereichs kann in Kombination mit einer aktiven Bremskraftverstärkung durch eine Rücknahme der Verstärkerkraft trotz eines reduzierten Hauptbremszylinder-Innendrucks dem Fahrer eine standardgemäße Rückwirkung simuliert werden.

Bei dem in Fig. 2a bis 2e beschriebenen Bremsverlaufs bleibt das vom Fahrer angeforderte Gesamt-Bremsmoment Mges zwischen den Zeiten t1 und t2 konstant. Trotz eines Schließens der Druckablassventile zwischen den Zeiten t1 und t2 können die Reib-Bremsmomente Mr1 und Mr2 gleich Null gehalten werden. Somit kann die vom Fahrer vorgegebene Fahrzeugverzögerung auch zwischen den Zeiten t1 und t2 rein rekuperativ ausgeführt werden, insbesondere kurz vor dem Fahrzeugstillstand.

Ab der Zeit t2 wird der rein rekuperative Bremsvorgang beendet. Dazu wird das Generator-Bremsmoment Mg zwischen den Zeiten t2 und t3 auf Null heruntergefahren. Ein derartiges Reduzieren des Generator-Bremsmoments Mg ist vor Allem vorteilhaft, sofern (in absehbarer Zeit) das mittels des mindestens einen Elektromotors aktuell maximal ausführbare Kann-Generator-Bremsmoment Mg0 kleiner als das aktuell mittels des mindestens einen Elektromotors ausgeübte Generator-Bremsmoment Mg und/oder ein von dem Fahrer und/oder einem automatischen Geschwindigkeitssteuersystem angeordertes (Soll-)Gesamt-Bremsmoment Mges wird.

Um die entfallende Bremswirkung des mindestens einen Elektromotors zu kompensieren, werden mindestens eine erste Druckfördereinrichtung des ersten Bremskreises zum Steigern des ersten Bremsdrucks in dem ersten Bremskreis und/oder mindestens eine zweite Druckfördereinrichtung des zweiten Bremskreises zum Steigern des zweiten Bremsdrucks in dem zweiten Bremskreis aktiviert. Die Reib-Bremsmomente Mr1 und Mr2 nehmen deshalb zwischen den Zeiten t2 und t3 stetig zu. Das Aktivieren der Druckfördereinrichtungen kann beispielsweise durch ein gemeinsames Pumpensteuersignal Ip ungleich Null zwischen den Zeiten t2 und t3 erfolgen.

Die Reib-Bremsmomente Mr1 und Mr2 können bei einer Verwendung verschiedener Radbremszylinder in den Bremskreisen unterschiedliche Werte aufweisen. Insbesondere kann das erste Reib-Bremsmoment Mr1 (fast) doppelt so groß wie das zweite Reib-Bremsmoment Mr2 sein. Auf diese Weise ist eine an die Auslegung/Anordnung des mindestens einen Elektromotors angepasste Reib-Bremskraftaufteilung realisierbar. (Unterstützend können auch die Radeinlassventile des ersten Bremskreises und/oder des zweiten Bremskreises mit angesteuert werden.) Ein Ansteuern des ersten Umschaltventils des ersten Bremskreises oder des zweiten Umschaltventils des zweiten Bremskreises zum Einstellen einer Druckdifferenz zwischen dem ersten Bremsdruck in dem ersten Bremskreis und dem zweiten Bremsdruck in dem zweiten Bremskreis ist vorteilhafter Weise möglich.

Wie in Fig. 2e erkennbar ist, übt der mindestens eine Elektromotor bei dem wiedergegebenen Beispiel sein Generator-Bremsmoment Mg ausschließlich auf die Vorderachse aus. Aufgrund der unterschiedlichen Reib-Bremsmomente Mr1 und Mr2 wird auch zum Zeitpunkt t3 eine deutliche Vorderachs-lastige Bremskreisverteilung erreicht. Ab der Zeit t3 werden die Druckfördereinrichtungen/Pumpen wieder gestoppt. Die Reib-Bremsmomente Mr1 und Mr2 bleiben somit bei einem konstanten Gesamt-Bremsmoment Mges konstant. Ab einer Zeit t4 reduziert der Fahrer das angeforderte Gesamt-Bremsmoment, bis es zur Zeit t5 gleich Null wird. Aufgrund eines Vorliegens der Umschaltventile in einem geöffneten Zustand wird zwischen den Zeiten t4 und t5 automatisch Volumen in den Hauptbremszylinder zurücktransferiert. Dies gewährleistet auch eine Reduzierung der Reib-Bremsmomente Mr1 und Mr2 (nahezu) auf Null bis zur Zeit t5.

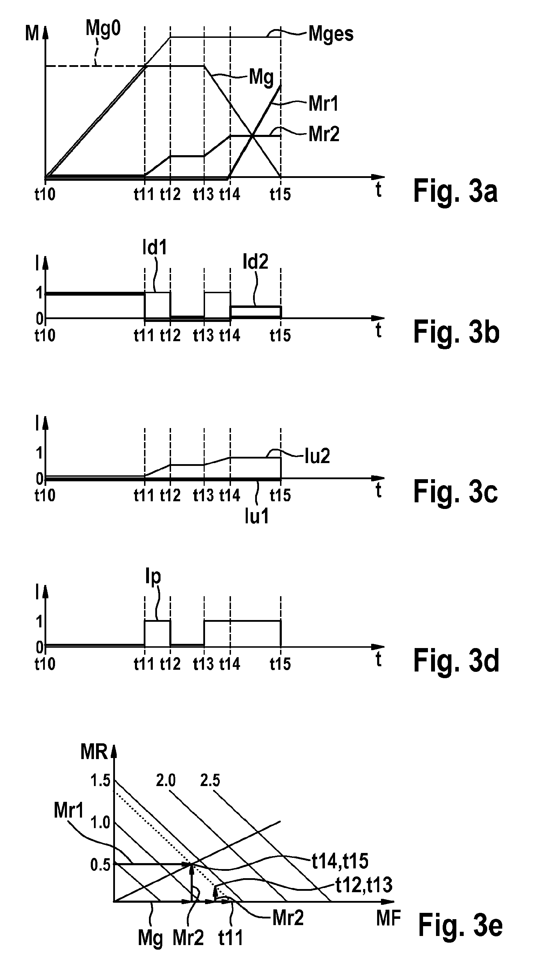

Fig. 3a bis 3e zeigen fünf Koordinatensysteme zum Erläutern einer zweiten Ausführungsform des Verfahrens zum Betreiben eines hydraulischen Bremssystems eines Fahrzeugs. Die Abszissen der Koordinatensysteme der Fig. 3a bis 3d sind die Zeitachse t. Die Ordinate des Koordinatensystems der Fig. 3a ist ein Bremsmoment M. Mittels der Ordinaten der Koordinatensysteme der Fig. 3b bis 3d sind normierte Stromstärken I wiedergegeben. Die Abszisse des Koordinatensystems der Fig. 2e ist ein insgesamt auf eine Vorderachse und/oder die daran angebundenen Vorderräder ausgeübtes Vorderachs-Bremsmoment MF. Die Ordinate des Koordinatensystems der Fig. 2e gibt ein auf eine Hinderachse und/oder die daran angeordneten Hinderräder ausgeübtes Hinterachs-Bremsmoment MR wieder.

Auch bei der hier dargestellten Ausführungsform des Verfahrens verfügt das Fahrzeug über mindestens einen als Generator einsetzbaren Elektromotor, welcher nur auf die Vorderachse einwirkt. Trotzdem ist mittels des hier ausgeführten Verfahrens eine ausgeglichenere Bremskraftverteilung realisierbar, wobei die Radbremszylinder des ersten Bremskreises auf die Vorderachse und die Radbremszylinder des zweiten Bremskreises auf die Hinterachse einwirken können.

Erst ab dem Zeitpunkt t10 betätigt ein Fahrer des Fahrzeugs das Bremsbetätigungselement. Allerdings ist das von dem Fahrer zwischen den Zeiten t10 und t11 vorgegebene (Soll-)Gesamt-Bremsmoment Mges kleiner als ein mittels des mindestens einen Elektromotors maximal ausführbares Kann-Generator-Bremsmoment Mg0. Somit können zwischen den Zeiten t10 und t11 die oben schon erläuterten Verfahrensschritte ausgeführt werden, um ein Generator-Bremsmoment Mg zu gewährleisten, welches gleich dem angeforderten Gesamt-Bremsmoment Mges ist. Auch das hier beschriebene Verfahren gewährleistet somit eine Rekuperationseffizienz von (nahezu) 100% zwischen den Zeiten t10 und t11.

Zwischen den Zeiten t11 und t12 fordert der Fahrer ein steigendes Gesamt-Bremsmoment Mges, welches größer als das mittels des mindestens einen Elektromotors maximal ausführbare Kann-Generator-Bremsmoment Mg0 ist. Trotzdem kann der Fahrerbremswunsch auch zwischen den Zeiten t11 und t12 verlässlich eingehalten/erfüllt werden. Dazu werden, sobald das aktuell maximal ausführbare Kann-Generator-Bremsmoment Mg0 kleiner als das angeforderte Soll-Gesamt-Bremsmoment Mges wird, zwischen den Zeiten t11 und t12 mindestens eines der beiden Druckablassventile geschlossen und mindestens eine erste Druckfördereinrichtung des ersten Bremskreises zum Steigern des ersten Bremsdrucks in dem ersten Bremskreis und/oder mindestens eine zweite Druckfördereinrichtung des zweiten Bremskreises zum Steigern des zweiten Bremsdrucks in dem zweiten Bremskreis aktiviert.

Vorzugsweise werden (aufgrund der parallelen Bremskreisaufteilung des hydraulischen Bremssystems), sofern das mittels des mindestens einen Elektromotors auf nur eine generatorisch abbremsbare Achse aktuell maximal ausführbare Kann-Generator-Bremsmoment Mg0 kleiner als das aktuell mittels des mindestens einen Elektromotors ausgeübte Generator-Bremsmoment Mg (und/oder das angeforderte Soll-Gesamt-Bremsmoment Mges) wird, während des gemeinsamen Aktivierens der ersten Druckfördereinrichtung und der zweiten Druckfördereinrichtung das Druckablassventil des der generatorisch abbremsbaren Achse zugeordneten Bremskreises der beiden Bremskreise in den zumindest teilgeöffneten Zustand und das Druckablassventil des einer generatorisch nicht-abbremsbaren Achse zugeordneten Bremskreises der beiden Bremskreise in den geschlossenen Zustand gesteuert. Dies gewährleistet eine ausgeglichenere Bremskraftverteilung trotz des generatorischen Betriebs des mindestens einen Elektromotors auf lediglich eine Achse des Fahrzeugs.

Bei dem hier wiedergegebenen Beispiel wird lediglich das zweite Druckablassventil des der Hinterachse zugeordneten zweiten Bremskreises (mittels eines zweiten Druckablassventilsteuersignals Id2 gleich Null) in den geschlossenen Zustand gesteuert. Demgegenüber bleibt das erste Druckablassventil des der Vorderachse zugeordneten ersten Bremskreises (mittels eines ersten Druckablassventilsteuersignals Id1 ungleich Null) in den geöffneten Zustand gesteuert. Somit ist selbst bei einem gemeinsamen Betrieb der Druckfördereinrichtungen/Pumpen der beiden Bremskreise gewährleistet, dass eine in den ersten Bremskreis geförderte Bremsflüssigkeit wieder über das erste Druckablassventil in das Bremsflüssigkeitsreservoir abfließen kann. Damit können alle Druckfördereinrichtungen/Pumpen mittels eines gemeinsamen Motors betrieben und/oder von einem einzigen Steuersignal, wie z.B. dem Pumpensteuersignal Ip, angesteuert werden.

Auf diese Weise kann gezielt der zweite Bremsdruck in dem zweiten Bremskreis gesteigert werden, wodurch ein Reibbremsmoment Mr2 ungleich Null ab dem Zeitpunkt t11 auf die generatorisch nicht-abbremsbare Hinterachse ausübbar ist. Zum Halten des zweiten Bremsdruckes in dem zweiten Bremskreis wird zusätzlich das zweite Umschaltventil zumindest zeitweise geschlossen. Beispielsweise wird dazu das stromlos geöffnete zweite Umschaltventil ab dem Zeitpunkt t11 zumindest zeitweise mittels eines zweiten Umschaltventilsteuersignals Iu2 bestromt. Demgegenüber kann während der Zeiten t11 und t12 das erste Umschaltventil offen gehalten werden, z.B. indem das stromlos geöffnete erste Umschaltventil mittels eines ersten Umschaltventilsteuersignals lu1 gleich Null weiterhin angesteuert wird.

Zwischen den Zeiten t12 und t13 ist der Fahrerbremswunsch konstant. Deshalb können ab dem Zeitpunkt t12 die Druckfördereinrichtungen/Pumpen gestoppt und beide Druckablassventile geschlossen werden.

Ab der Zeit t13 nimmt das maximal ausführbare Kann-Generator-Bremsmoment Mg0 ab. Somit muss das mittels des Elektromotors ausgeübte Generator-Bremsmoment Mg bis zur Zeit t15 auf Null heruntergefahren werden. Das wegfallende Generator-Bremsmoment Mg kann jedoch kompensiert werden, indem mittels eines gemeinsamen Betriebs der Druckfördereinrichtungen zusätzliches Volumen gefördert wird. Dabei wird in einer bevorzugten Ausführungsform zuerst zwischen den Zeiten t13 und t14 an der generatorisch nicht-abbremsbaren Achse/Hinterachse Druck aufgebaut, um eine möglichst stabile Bremskraftverteilung zu erreichen. Das erste Druckablassventil des der generatorisch abbremsbaren Achse zugeordneten ersten Bremskreis wird erneut in einen zumindest teilgeöffneten Zustand gesteuert, während das zweite Druckablassventil des der generatorisch nicht-abbremsbaren Achse zugeordneten zweiten Bremskreis zwischen den Zeiten t13 und t14 in den geschlossenen Zustand gesteuert wird. Zum genauen Einstellen eines gewünschten Drucks in dem zweiten Bremskreis/an der Hinterachse kann zusätzlich das zweite Umschaltventil angesteuert werden.

Ist in dem zweiten Bremskreis der Bremsdruck erreicht, welcher auch ohne die zwischen den Zeiten t10 und t11 ausgeführte Verblendung vorhanden wäre, so wird auch in dem der generatorisch abbremsbaren Achse/Vorderachse zugeordneten ersten Bremskreis Druck aufgebaut. Dazu wird zwischen den Zeiten t14 und t15 bei weiterhin aktivierten Druckfördereinrichtungen/Pumpen das erste Druckablassventil des ersten Bremskreises geschlossen. Außerdem wird, um eine Drucksteigerung in dem zweiten Bremskreis zu verhindert, zwischen den Zeiten t14 und t15 zweite Druckablassventil in einen zumindest teilgeöffneten Zustand gesteuert. Das von der Rückförderhydraulik zwischen den Zeiten t14 und t15 in den zweiten Bremskreis geförderte Volumen kann somit über das zweite Druckablassventil wieder abfließen. Sobald die gewünschten Zieldrücke in beiden Bremskreisen erreicht sind, ist eine weitere Ansteuerung der Ventile und der Druckfördereinrichtungen nicht mehr erforderlich.

Vorteilhafterweise werden die oben ausgeführten Verfahrensschritte innerhalb des Jump-in-Bereichs durchgeführt, so dass keine Pedalrückwirkungen für den Fahrer wahrnehmbar sind. Oberhalb des Jump-in-Bereichs kann in Kombination mit einem aktiven Bremskraftverstärker für den Fahrer das standardgemäße/bevorzugte Bremsbetätigungsgefühl (Pedalgefühl) simuliert werden. Durch eine Reduzierung einer von dem Bremskraftverstärker bereitgestellten Unterstützungskraft kann ein reduzierter Bremsdruck in mindestens einem Bremskreis so kompensiert werden, dass der Fahrer die Reduzierung des Bremsdrucks nicht spürt. (Auch zum Ansteuern des Bremskraftverstärkers kann die oben beschriebene Steuervorrichtung eingesetzt werden.)

Die oben ausgeführten Verfahren ermöglichen einen bedarfsgerechten "nichtmechanischen" Leerweg mittels einer gezielten Ventilansteuerungsstrategie. Außerdem kann bei einer Ausführung beider Verfahren eine rekuperative Effizienz von (nahezu) 100% für den kompletten Verzögerungsbereich erreicht werden, indem keine hydraulischen Drücke aufgebaut oder diese während einer Bremsung wieder abgebaut werden.

## Patentansprüche

1. Aggregat (10) für ein hydraulisches Bremssystem eines Fahrzeugs mit:
einem ersten Teilbremskreis (12a) oder Bremskreis (14a), welcher an einen Hauptbremszylinder (16) anbindbar oder angebunden ist, an mindestens einen ersten Radbremszylinder (18a) anbindbar oder angebunden ist, und
welcher ein erstes Druckablassventil (20a) umfasst, welches ausgangsseitig an ein Bremsflüssigkeitsreservoir (22) anbindbar oder angebunden ist; und
einem zweiten Teilbremskreis (12b) oder Bremskreis (14b), welcher an einen Hauptbremszylinder (16) anbindbar oder angebunden ist und an mindestens einen zweiten Radbremszylinder (18b) anbindbar oder angebunden ist;
**dadurch gekennzeichnet, dass**
der erste Teilbremskreis (12a) oder Bremskreis (14a) ein erstes Umschaltventil (24a) aufweist, über welches der erste Teilbremskreis (12a) oder Bremskreis (14a) an den Hauptbremszylinder (16) anbindbar oder angebunden ist; und
der zweite Teilbremskreis (12b) oder Bremskreis (14b) ein zweites Umschaltventil (24b) aufweist, über welches der zweite Teilbremskreis (12b) oder Bremskreis (14b) an den Hauptbremszylinder (16) anbindbar oder angebunden ist, und welcher ein zweites Druckablassventil (20b) umfasst, welches ausgangsseitig an das Bremsflüssigkeitsreservoir (22) anbindbar oder angebunden ist.

2. Aggregat (10) nach Anspruch 1, wobei der erste Teilbremskreis (12a) oder Bremskreis (14a) einen ersten Pulsationsdämpfer (48a) und/oder der zweite Teilbremskreis (12b) oder Bremskreis (14b) einen zweiten Pulsationsdämpfer (48b) umfassen.

3. Aggregat (10) nach Anspruch 1 oder 2, wobei der erste Teilbremskreis (12a) oder Bremskreis (14a) eine erste Druckfördereinrichtung (38a), welche saugseitig an das Bremsflüssigkeitsreservoir (22) anbindbar oder angebunden ist, umfasst, und/oder der zweite Teilbremskreis (12b) oder Bremskreis (14b) eine zweite Druckfördereinrichtung (38b), welche saugseitig an das Bremsflüssigkeitsreservoir (22) anbindbar oder angebunden ist, umfasst.

4. Hydraulisches Bremssystem für ein Fahrzeug mit einem Aggregat (10) nach einem der Ansprüche 1 bis 3.

5. Hydraulisches Bremssystem nach Anspruch 4, wobei der erste Teilbremskreis (12a) oder Bremskreis (14a) und der zweite Teilbremskreis (12b) oder Bremskreis (14b) über einen gemeinsamen Saugleitungsabschnitt (35) mit dem Bremsflüssigkeitsreservoir (22) verbunden sind.

6. Steuervorrichtung (100) zum Zusammenwirken mit einem hydraulischen Bremssystem nach Anspruch 4 oder 5, mit:
einer Ansteuereinrichtung (102), welche dazu ausgelegt ist, unter Berücksichtigung zumindest eines bereitgestellten Sensorsignals (104) eines Bremsbetätigungselement-Sensors (68) das erste Druckablassventil (20a) des ersten Bremskreises (14a) des hydraulischen Bremssystems, welcher über das erste Umschaltventil (24a) des ersten Bremskreises (14a) an den Hauptbremszylinder (16) des hydraulischen Bremssystems angebunden ist und mindestens den ersten Radbremszylinder (18a) aufweist, und das zweite Druckablassventil (20b) des zweiten Bremskreises (14b) des hydraulischen Bremssystems, welcher über das zweite Umschaltventil (24b) des zweiten Bremskreises (14b) an den Hauptbremszylinder (16) des hydraulischen Bremssystems angebunden ist und mindestens den zweiten Radbremszylinder (18b) aufweist, jeweils in einen zumindest teilgeöffneten Zustand so zu steuern, dass zumindest zeitweise während einer Betätigung eines an dem Hauptbremszylinder (16) angebundenen Bremsbetätigungselements (32) Bremsflüssigkeit aus dem ersten Bremskreis (14a) in das ausgangsseitig an dem ersten Druckablassventil (20a) angebundene Bremsflüssigkeitsreservoir (22) und aus dem zweiten Bremskreis (14b) in das ausgangsseitig an dem zweiten Druckablassventil (20b) angebundene Bremsflüssigkeitsreservoir (22) verschiebbar ist.

7. Steuervorrichtung (100) nach Anspruch 6, wobei die Ansteuereinrichtung (102) dazu ausgelegt ist, sofern eine als zumindest Teil des Sensorsignals (104) bereitgestellte Größe bezüglich eines Verstellwegs des betätigten Bremsbetätigungselements (32) aus seiner Ausgangsstellung und/oder bezüglich einer Betätigungsstärke der Betätigung des Bremsbetätigungselements (32) kleiner als eine vorgegebene Grenz-Größe ist, das erste Druckablassventil (20a) und das zweite Druckablassventil (20b) zumindest zeitweise derart in den zumindest teilgeöffneten Zustand zu steuern, dass ein in dem ersten Bremskreis (14a) vorliegender erster Bremsdruck und ein in dem zweiten Bremskreis (14b) vorliegender zweiter Bremsdruck gleich einem Druck in dem Bremsflüssigkeitsreservoir (22) sind.

8. Steuervorrichtung (100) nach Anspruch 7, wobei die Ansteuereinrichtung (102) zusätzlich dazu ausgelegt ist, sofern die Größe größer als die vorgegebene Grenz-Größe ist, das erste Druckablassventil (20a) und das zweite Druckablassventil (20b) in einen geschlossenen Zustand zu steuern.

9. Steuervorrichtung (100) nach einem der Ansprüche 6 bis 8, wobei die Ansteuereinrichtung (102) zusätzlich dazu ausgelegt ist, unter Berücksichtigung zumindest einer bereitgestellten Information bezüglich eines mittels mindestens eines Elektromotors aktuell maximal ausführbaren Kann-Generator-Bremsmoments (Mg0) mindestens eine erste Druckfördereinrichtung (38a) des ersten Bremskreises (14a) und/oder eine zweite Druckfördereinrichtung (38b) des zweiten Bremskreises (14b) so anzusteuern, dass, sofern das Kann-Generator-Bremsmoment (Mg0) kleiner als ein aktuell mittels des mindestens einen Elektromotors ausgeführtes Generator-Bremsmoment (Mg) und/oder ein von einem Fahrer und/oder einem automatischen Geschwindigkeitssteuersystem angefordertes Soll-Gesamt-Bremsmoment (Mges) ist, der erste Bremsdruck in dem ersten Bremskreis (14a) mittels der mindestens einen angesteuerten ersten Druckfördereinrichtung (38a) und/oder der zweite Bremsdruck in dem zweiten Bremskreis (14b) mittels der mindestens einen angesteuerten zweiten Druckfördereinrichtung (38b) steigerbar sind.

10. Steuervorrichtung (100) nach Anspruch 9 für ein hydraulisches Bremssystem mit einer parallelen Bremskreisaufteilung, wobei die Ansteuereinrichtung (102) zusätzlich dazu ausgelegt ist, sofern das mittels des mindestens einen Elektromotors auf nur eine generatorisch abbremsbare Achse aktuell maximal ausführbare Kann-Generator-Bremsmoment (Mg0) kleiner als das aktuell mittels des mindestens einen Elektromotors ausgeübte Generator-Bremsmoment (Mg) und/oder das angeforderte Soll-Gesamt-Bremsmoment (Mges) ist, während des gemeinsamen Aktivierens der ersten Druckfördereinrichtung (38a) und der zweiten Druckfördereinrichtung (38b) das Druckablassventil (20a) des der generatorisch abbremsbaren Achse zugeordneten Bremskreises (14a) der beiden Bremskreise (14a, 14b) in den zumindest teilgeöffneten Zustand und das Druckablassventil (20b) des einer generatorisch nicht-abbremsbaren Achse zugeordneten Bremskreises (14b) der beiden Bremskreise (14a, 14b) in den geschlossenen Zustand zu steuern.

11. Verfahren zum Betreiben eines hydraulischen Bremssystems eines Fahrzeugs **gekennzeichnet durch** den Schritt:
Steuern eines ersten Druckablassventils (20a) eines ersten Bremskreises (12a) des hydraulischen Bremssystems, welcher über ein erstes Umschaltventil (24a) des ersten Bremskreises (14a) an einen Hauptbremszylinder (16) des hydraulischen Bremssystems angebunden ist und mindestens einen ersten Radbremszylinder (18a) aufweist, und eines zweiten Druckablassventils (20b) eines zweiten Bremskreises (14b) des hydraulischen Bremssystems, welcher über ein zweites Umschaltventil (24b) des zweiten Bremskreises (14b) an den Hauptbremszylinder (16) angebunden ist und mindestens einen zweiten Radbremszylinder (18) aufweist, jeweils in einen zumindest teilgeöffneten Zustand zumindest zeitweise während einer Betätigung eines an dem Hauptbremszylinder (16) angebundenen Bremsbetätigungselements (32) zum Verschieben von Bremsflüssigkeit aus dem ersten Bremskreis (14a) in ein ausgangsseitig an dem ersten Druckablassventil (20a) angebundenes Bremsflüssigkeitsreservoir (22) und aus dem zweiten Bremskreis (14b) in das ausgangsseitig an dem zweiten Druckablassventil (20b) angebundene Bremsflüssigkeitsreservoir (22).

12. Verfahren nach Anspruch 11, wobei, sofern ein Verstellweg des betätigten Bremsbetätigungselements (32) aus seiner Ausgangsstellung kleiner als ein vorgegebener Grenz-Verstellweg ist und/oder eine Betätigungsstärke der Betätigung des Bremsbetätigungselements (32) kleiner als eine vorgegebene Grenz-Betätigungsstärke ist, das erste Druckablassventil (20a) und das zweite Druckablassventil (20b) derart zumindest zeitweise in den zumindest teilgeöffneten Zustand gesteuert werden, dass ein in dem ersten Bremskreis (14a) vorliegender erster Bremsdruck und ein in dem zweiten Bremskreis (14b) vorliegender zweiter Bremsdruck gleich einem Druck in dem Bremsflüssigkeitsreservoir (22) werden.

13. Verfahren nach Anspruch 12, wobei, sofern der Verstellweg des betätigten Bremsbetätigungselements (32) aus seiner Ausgangsstellung größer als der vorgegebene Grenz-Verstellweg ist und/oder die Betätigungsstärke der Betätigung des Bremsbetätigungselements (32) größer als die vorgegebene Grenz-Betätigungsstärke ist, das erste Druckablassventil (20a) und das zweite Druckablassventil (20b) in einen geschlossenen Zustand gesteuert werden.

14. Verfahren nach einem der Ansprüche 11 bis 13, wobei, sofern ein mittels mindestens eines Elektromotors aktuell maximal ausführbares Kann-Generator-Bremsmoment (Mg0) kleiner als ein aktuell mittels des mindestens einen Elektromotors ausgeübtes Generator-Bremsmoment (Mg) und/oder ein von einem Fahrer und/oder einem automatischen Geschwindigkeitssteuersystem angefordertes Soll-Gesamt-Bremsmoment (Mges) wird, mindestens eine erste Druckfördereinrichtung (38a) des ersten Bremskreises (14a) zum Steigern des ersten Bremsdrucks in dem ersten Bremskreis (14a) und/oder mindestens eine zweite Druckfördereinrichtung (38b) des zweiten Bremskreises (14b) zum Steigern des zweiten Bremsdrucks in dem zweiten Bremskreis (14b) aktiviert werden.

15. Verfahren nach Anspruch 14, wobei bei einer parallelen Bremskreisaufteilung des hydraulischen Bremssystems, sofern das mittels des mindestens einen Elektromotors auf nur eine generatorisch abbremsbare Achse aktuell maximal ausführbare Kann-Generator-Bremsmoment (Mg0) kleiner als das aktuell mittels des mindestens einen Elektromotors ausgeübte Generator-Bremsmoment (Mg) und/oder das angeforderte Soll-Gesamt-Bremsmoment (Mges) wird, während des gemeinsamen Aktivierens der ersten Druckfördereinrichtung (38a) und der zweiten Druckfördereinrichtung (38b) das Druckablassventil (20a) des der generatorisch abbremsbaren Achse zugeordneten Bremskreises (14a) der beiden Bremskreise (14a, 14b) in den zumindest teilgeöffneten Zustand und das Druckablassventil (20b) des einer generatorisch nicht-abbremsbaren Achse zugeordneten Bremskreises (14b) der beiden Bremskreise (14a, 14b) in den geschlossenen Zustand gesteuert werden.
